# EUROPEAN PATENT SPECIFICATION

(11) **EP 3 816 592 B1**
(45) Date of publication and mention of the grant of the patent: **29.03.2023**
(21) Application number: 18931508.8
(22) Date of filing: 21.12.2018
(51) Int. Cl.: G01F 23/74, G01F 23/00, G01F 23/76

(54) **WATER TANK ASSEMBLY AND GAS TREATMENT DEVICE**
WASSERTANKANORDNUNG UND GASBEHANDLUNGSVORRICHTUNG
ENSEMBLE RÉSERVOIR D'EAU ET DISPOSITIF DE TRAITEMENT DE GAZ

(30) Priority: 30.08.2018 CN 201810999641
(43) Date of publication of application: 05.05.2021
(73) Proprietor: Gree Electric Appliances, Inc. of Zhuhai, Zhuhai, Guangdong 519070 (CN)
(72) Inventor: ZHANG, Yihong, Zhuhai, Guangdong 519070 (CN); BAI, Jiandong, Zhuhai, Guangdong 519070 (CN); ZHANG, Peide, Zhuhai, Guangdong 519070 (CN); HUANG, Zhongping, Zhuhai, Guangdong 519070 (CN); LING, Yesheng, Zhuhai, Guangdong 519070 (CN); CHEN, Zhicong, Zhuhai, Guangdong 519070 (CN); DING, Rui, Zhuhai, Guangdong 519070 (CN)
(74) Representative: Zacco GmbH
(86) International application number: PCT/CN2018/122495
(87) International publication number: WO 2020/042460

(56) References cited:
- EP-A1- 3 351 786
- CN-A- 106 153 156
- CN-A- 106 153 156
- CN-A- 108 253 562
- CN-U- 205 679 301
- CN-U- 205 679 301
- CN-U- 205 939 492
- DE-A1- 3 843 979
- JP-A- H07 302 525
- JP-A- 2006 138 256
- JP-A- 2013 096 754
- US-A1- 2016 238 431

## Description

### Related Application

The present application claims priority to Chinese patent application No. 201810999641.0, filed on August 30, 2018 and entitled "Water tank assembly and gas treatment device".

### Technical Field

The disclosure relates to the technical field of cooling fans, and in particular to a water tank assembly and a gas treatment device.

### Background

A cooling fan is an air conditioning device that cools indoor air by evaporating water in the air, the cooling fan includes a housing, a fan assembly installed in a housing air duct and a water circulation device, the water circulation device includes a water tank, a water pump positioned in the water tank and a water curtain used for water evaporation and heat absorption, water in the water tank is sucked to a water sink at an upper end of the water curtain by the water pump, the water curtain is continuously wetted, cold air is blown out from an air outlet by a fan device so as to achieve a purse of cooling.

The water sink is internally provided with a water level detection device, the water level detection device includes a floater and a reed switch, the floater is ascended or descended along with a water level, the floater has magnetic properties, when the floater is ascended or descended, the reed switch is enabled to generate a corresponding switch signal, and transmit the switch signal to a circuit board connected with the reed switch. The reed switch is provided on the circuit board, the circuit board is naked and configured outside the water tank, once water leakage happens to the water tank, the circuit board has a short-circuited risk, and it is very dangerous.

### Summary

In view of this, a purpose of some embodiments of the disclosure is to provide a water tank assembly and a gas treatment device with good safety.

The water tank assembly according to the invention comprises a water tank, a floater and a proximity switch, the floater is able to go up or down with water in the water tank, the floater has magnetic properties, the proximity switch includes a magnetic sensor and a seal waterproof layer provided outside the magnetic sensor, the magnetic sensor outputs different signals according to different positions of the floater with respect to the magnetic sensor, and the seal waterproof layer is used for waterproofing of the magnetic sensor. An outer side wall of the water tank is provided with an installing column which is configured to form an included angle with a side wall of the water tank, and the installing column passes through the proximity switch so as to achieve pre-installation of the proximity switch, the side wall of the water tank is provided with multiple limiting ribs, the multiple limiting ribs are provided at a circumferential outer side of the proximity switch, the multiple limiting ribs are provided at an upper part, a lower part and two sides of the proximity switch.

In one of embodiments, the seal waterproof layer includes a plastic layer and a waterproof glue provided at an inner side of the plastic layer.

In one of embodiments, one end of the limiting rib is provided on the outer side wall of the water tank, and the other end of the limiting rib is provided with a guiding surface used for guiding when the proximity switch is installed on the installing column.

In one of embodiments, a circumferential outer side of the installing column is provided with a reinforcing rib, and the reinforcing rib is formed by the limiting rib connected with the installing column.

In one of embodiments, the proximity switch pre-installed on the installing column is connected with the water tank through at least one mode of thread connection, welding, binding, and locking.

In one of embodiments, the water tank assembly further includes a guiding structure used for guiding the floater when the floater is ascended or descended.

In one of embodiments, the guiding structure includes a guiding groove, the side wall of the water tank forms one side wall of the guiding groove.

In one of embodiments, a limiting structure is provided above the guiding groove, and used for limiting an ascended maximum position of the floater.

In one of embodiments, the limiting structure includes a blocking plate provided at an upper side of a groove end face of the guiding groove, the blocking plate is arranged perpendicular to the side wall of the water tank.

In order to achieve the above purpose, in some embodiments of the disclosure adopts the following technical schemes.

A gas treatment device includes the above water tank assembly.

In one of embodiments, the gas treatment device includes a cooling fan.

Based on the water tank assembly and the gas treatment device of the disclosure, the seal waterproof layer of the proximity switch is able to prevent the magnetic sensor provided inside the proximity switch from contacting water, thereby avoiding a risk caused by the magnetic sensor contacting the water, and improving the safety of the water tank assembly and the gas treatment device.

EP3351786A1 discloses a fluid drain off system for a fuel filter, the system including a float, movable together with a trigger device for a switch, such as a magnet, in response to the level of fluid contaminant, a switch arranged to be selectively triggered by the trigger device upon the fluid contaminant reaching a predetermined level, and a fluid passage configured to be selectively opened in response to the triggering of the switch to allow fluid contaminants to be drained from the filter.

DE3843979A1 discloses an economy device for metering the quantity of water to be filled into a bathtub is retrofitted onto the outlet fittings of the bathtub. In so doing, the water preparation costs, calculated for the year, can be reduced markedly. Nowadays, with energy becoming ever scarcer and more expensive, and ever-increasing drinking water preparation costs, a great step has been made by the invention in the direction of saving energy and water costs.

JPH07302525A discloses a float switch which is firm and easy to be assembled. A water-proof switch is used as a switchgear means to be set in a float switch and thus no member such as a partitioning plate, etc., to protect a switch from humidity is needed and a push button 16b of the switch is directly pushed by a shaft set in a water receiving tank. With this structure, the number of the parts can be lessened and cost can be down and at the same time, the assembly of the switch becomes easy. Also, since the structure is simplified, troubles hardly occur and the switch becomes firm.

### Brief Description of the Drawings

The scope of the disclosure is defined by the claims.

Implementation modes of a water tank assembly and a gas treatment device according to the disclosure are described below with reference to drawings. In the drawings:
Fig. 1 is a sectional view of the water tank assembly near a floater in the specific implementation mode of the disclosure;
Fig. 2 is a structure schematic diagram of an installing column and a thread column at a water tank in the specific implementation mode of the disclosure;
Fig. 3 is a structure schematic diagram of a proximity switch in the specific implementation mode of the disclosure; and
Fig. 4 is a sectional view of the proximity switch in the specific implementation mode of the disclosure.

In the drawings:
1. Water tank; 11. Limiting rib; 111. Guiding surface; 112. Avoidance gap;
2. Floater;
3. Proximity switch; 31. Installing hole; 32. Thread corresponding hole; 33. Magnetic sensor; 34. Seal waterproof layer; 341. Waterproof glue; 342. Plastic layer; 35. First lower end portion; 36. Second lower end portion;
4. Installing column; 41. Reinforcing rib;
5. Thread column; 51. Thread hole;
6. Guiding structure; 61. Guiding groove; 62. Guiding plate; 63. Limiting structure; and 631. Blocking plate.

### Detailed Description of the Embodiments

The disclosure is described below on the basis of the embodiments, but the disclosure is not limited to these embodiments. In the detailed description of the disclosure below, some specific details are described in detail.

In addition, it should be understood by those of ordinary skill in the art that drawings provided here are used for illustrative purposes, and the drawings are not necessarily drawn in proportion.

Unless clearly specified in the context, "including", "containing" and similar words in the overall description and claims should be interpreted as inclusive rather than exclusive or exhaustive meanings; and that is, the meaning of "including but not limited to".

In the description of the disclosure, it should be understood that terms "first", "second" and the like are only used for describing purposes, and may not be understood as indicating or implying relative importance. In addition, in the description of the disclosure, unless otherwise specified, the meaning of "multiple" is two or more than two.

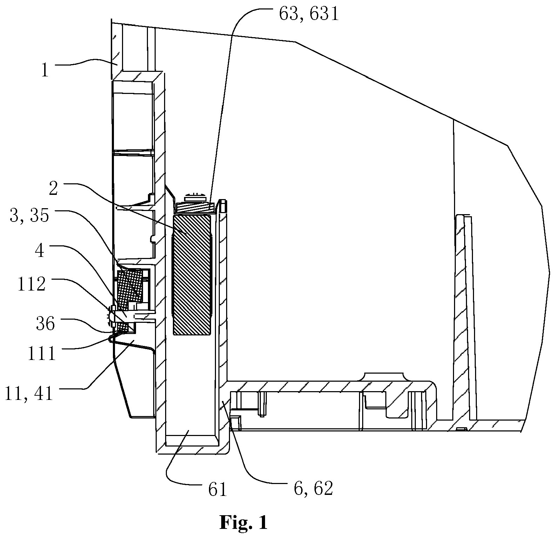

Reference to Fig. 1 to Fig. 4, a water tank assembly of the disclosure is provided on a cooling fan for example, the water tank assembly includes a water tank 1, a floater 2 and a proximity switch 3, the floater 2 is able to go up or down with water in the water tank 1, the floater 2 has magnetic properties, the proximity switch 3 includes a magnetic sensor 33 and a seal waterproof layer 34 provided outside the magnetic sensor 33, the magnetic sensor 33 outputs different signals according to different positions of the floater 2 with respect to the magnetic sensor 33, and the seal waterproof layer 34 is used for waterproofing of the magnetic sensor 33, thereby avoiding a risk caused by the magnetic sensor 33 contacting the water, and improving the safety of the water tank assembly.

The magnetic sensor 33 is able to output a first signal when the floater 2 is close to the magnetic sensor 33, the magnetic sensor 33 is located in a conducting state under the first signal state, the first signal is used to control the water in the water tank 1 to be pumped to a water sink (not shown in the figure) at an upper end of a water curtain, the magnetic sensor 33 may output a second signal when the floater 2 is far away from the magnetic sensor 33, the magnetic sensor 33 is located in a disconnecting state under the second signal state, the second signal is used to control the water in the water tank 1 not to be pumped to the water sink at the upper end of the water curtain.

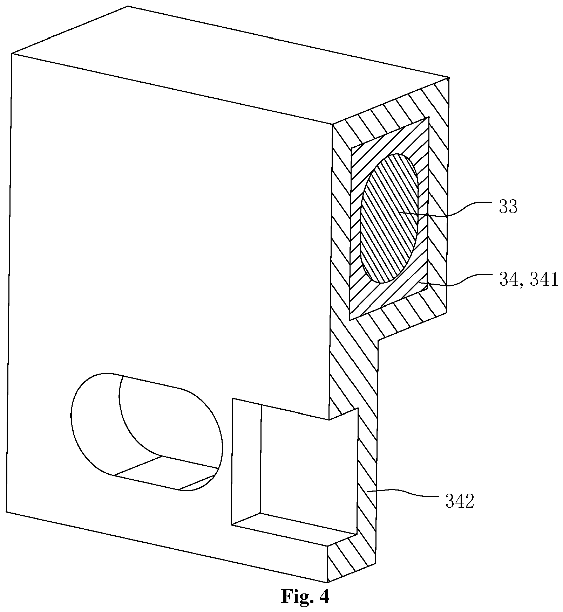

As shown in Fig. 4, the seal waterproof layer 34 includes a plastic layer 342 and waterproof glue 341 provided at an inner side of the plastic layer 342, an outer side of the magnetic sensor 33 is wrapped by the waterproof glue 341, the waterproof glue 341 is capable of not only waterproofing the magnetic sensor 33, but also avoiding electric leakage of the magnetic sensor 33, and an outer side of the waterproof glue 341 is provided with the plastic layer 342, so that a waterproof property of the proximity switch 3 is further improved, and the safety of the water tank assembly provided with the proximity switch 3 is further improved.

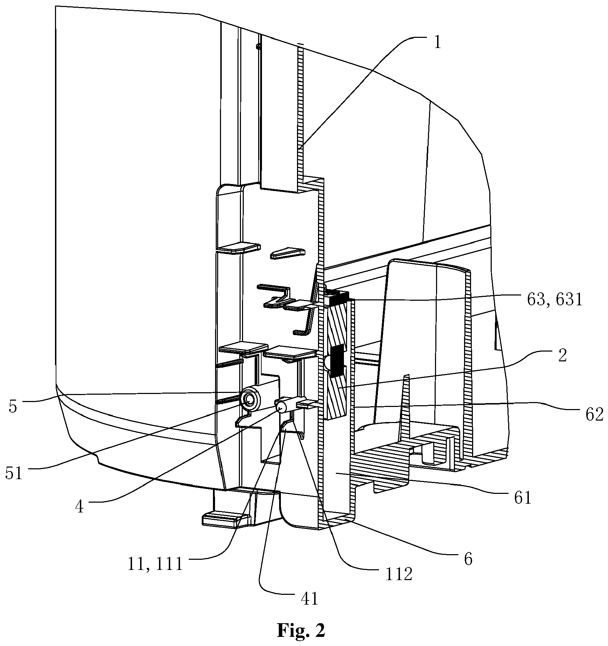

As shown in Fig. 2, an outer side wall of the water tank 1 is provided with an installing column 4 which is configured to form an included angle with a side wall of the water tank 1, the proximity switch 3 is provided with an installing hole 31, the installing column 4 passes through the proximity switch 3 by the installing hole 31 so as to achieve pre-installation of the proximity switch 3, so the installation of the proximity switch 3 is more convenient and rapid by the installing column 4. When the proximity switch 3 is pre-installed on the outer side wall of the water tank 1 by using the installing column 4, the installing column 4 may have a guiding effect on the pre-installation of the proximity switch 3, so that the pre-installation of the proximity switch 3 is more convenient and rapid. After the proximity switch 3 is pre-installed on the outer side wall of the water tank 1, the proximity switch 3 is reliably installed on the water tank 1 through thread connection, replaceably, after the proximity switch 3 is pre-installed on the outer side wall of the water tank 1, the proximity switch 3 may also be installed on the outer side wall of the water tank 1 by using at least one mode of welding, binding and locking.

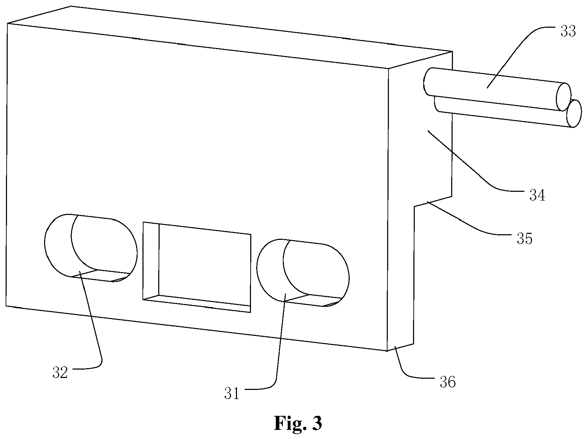

In one embodiment, as shown in Fig. 2, the outer side wall of the water tank 1 is further provided with a thread column 5, an axis of the thread column 5 is configured perpendicular to the outer side wall of the water tank 1, the thread column 5 is provided with a thread hole 51, the proximity switch 3 is provided with a thread corresponding hole 32 configured corresponding to the thread hole 51 on the thread column 5, as shown in Fig. 3, after the proximity switch 3 is pre-installed on the outer side wall of the water tank 1, the proximity switch 3 is installed on the outer side wall of the water tank 1 by using a fastener configured in the thread hole 51 on the thread column 5 and the thread corresponding hole 32 on the proximity switch 3, in this way, the installation of the proximity switch 3 is more reliable.

As shown in Fig. 2, the side wall of the water tank 1 is provided with a limiting rib 11 used for limiting the proximity switch 3, in an assembling state, there are multiple limiting ribs 11, the multiple limiting ribs 11 are provided at a circumferential outer side of the proximity switch 3, the multiple limiting ribs 11 include multiple limiting ribs provided at an upper part, a lower part and two sides of the proximity switch 3.

As shown in Fig. 1, one end of the limiting rib 11 is provided on the outer side wall of the water tank 1, and the other end of the limiting rib 11 is provided with a guiding surface 111. The guiding surface 111 is a side surface, towards the proximity switch 3, of the limiting rib 11, along an installing direction of the proximity switch 3, the guiding surface 111 is inclined towards the proximity switch 3, in this way, the guiding surface 111 is used for guiding the proximity switch 3 when the proximity switch 3 is installed on the installing column 4, so that the proximity switch 3 is more conveniently installed on the installing column 4.

A circumferential outer side of the installing column 4 is provided with a reinforcing rib 41, as shown in Fig. 2, and the reinforcing rib 41 is formed by the limiting rib 11 connected with the installing column 4, the limiting rib 11 connected with the installing column 4 is connected with the water tank 1 and the installing column 4 at the same time, the reinforcing rib 41 connected with the installing column 4 is capable of not only limiting the proximity switch 3, but also increasing the strength of the installing column 4.

A circumferential outer side of the thread column 5 on the water tank 1 is provided with the reinforcing rib 41, as shown in Fig. 2, the reinforcing rib at the outer side of the thread column 5 is formed by the limiting rib 11 connected with the thread column 5, the limiting rib 11 connected with the thread column 5 is connected with the water tank 1 and the thread column 5 at the same time, the reinforcing rib 41 connected with the thread column 5 is capable of not only limiting the proximity switch 3, but also increasing the strength of the thread column 5.

The proximity switch 3 includes a first lower end portion 35 and a second lower end portion 36, as shown in Fig. 1, the first lower end portion 35 is provided above the second lower end portion 36, the limiting rib 11 below the installing column 4 includes an avoidance gap 112, the avoidance gap 112 is used for avoiding the second lower end portion 36. The guiding surface 11 on the limiting rib 111 configured below the installing column 4 is provided at the avoidance gap 112.

The water tank assembly further includes a guiding structure 6, as shown in Fig. 1, the guiding structure is used for guiding the floater 2 when the floater 2 is ascended or descended, in this way, inclination or inclined ascending or descending may not happen when the floater 2 is ascended or descended, and the proximity switch 3 may not be affected to send a signal normally.

The guiding structure 6 includes a guiding groove 61, as shown in Fig. 1, the side wall of the water tank 1 forms one side wall of the guiding groove 61, a bottom wall at an inner side of the water tank 1 is provided with a guiding plate 62, the guiding plate 62 is configured to be U-shaped, an U-shaped opening of the guiding plate 62 faces to the side wall, provided with the installing column 4, of the water tank 1, a lower end of the guiding plate 62 is provided on the bottom wall at the inner side of the water tank 1, side walls at two sides of the guiding plate 62 are connected with the inner side wall of the water tank 1, the U-shaped inner side wall of the guiding plate 62 forms an inner side wall of the guiding groove 61, the water tank 1 is communicated with the guiding groove 61, water in the water tank 1 is flowed into the guiding groove 61, a water level in the guiding groove 61 and a water level in the water tank 1 are synchronously changed, the floater 2 is configured in the guiding groove 61, and the floater 2 is ascended along with the ascending of the water level in the water tank 1, and descended along with the descending of the water level in the water tank 1.

A limiting structure 63 is provided above the guiding groove 61, as shown in Fig. 1, the limiting structure is used for limiting an ascended maximum position of the floater 2, in this way, the floater 2 is avoided from being ascended to a distance which may not be sensed by the proximity switch 3, and it is avoided that the proximity switch 3 may not send the first signal correctly, so a risk caused because the water in the water tank 1 is not pumped into the water sink at the upper end of the water curtain in time is avoided. In one embodiment, the limiting structure 63 includes a blocking plate 631 provided at an upper side of a groove end face of the guiding groove 61, the blocking plate 631 is arranged approximately perpendicular to the side wall of the water tank 1, and the blocking plate 631 is provided on an upper end face of the guiding plate 62.

In one specific implementation mode, the proximity switch 3 is provided at the bottom of the water tank 1, the proximity switch 3 is installed below the guiding structure 6, the proximity switch 3 is located in the disconnecting state when the floater 2 is positioned in a low position, the water in the water tank 1 is stopped to be pumped to the water sink at the upper end of the water curtain, correspondingly, the proximity switch 3 is located in the conducting state when the floater 2 is positioned in a high position, at this moment, the water in the water tank 1 is pumped to the water sink at the upper end of the water curtain.

A gas treatment device of the disclosure includes the above water tank assembly, capable of avoiding the risk caused by the magnetic sensor 33 contacting the water, and improving the safety of the gas treatment device.

## Claims

1. A water tank assembly, comprising a water tank (1), a floater (2) and a proximity switch (3), the floater (2) is able to go up or down with water in the water tank (1), the floater (2) has magnetic properties, the proximity switch (3) comprising a magnetic sensor (33) and a seal waterproof layer (34) provided outside the magnetic sensor (33), the magnetic sensor (33) outputs different signals according to different positions of the floater (2) with respect to the magnetic sensor (33), and the seal waterproof layer (34) is used for waterproofing of the magnetic sensor (33), **characterised in that** an outer side wall of the water tank (1) is provided with an installing column (4) which is configured to form an included angle with a side wall of the water tank (1), and the installing column (4) passes through the proximity switch (3) so as to achieve pre-installation of the proximity switch (3), the side wall of the water tank (1) is provided with multiple limiting ribs (11), the multiple limiting ribs (11) are provided at a circumferential outer side of the proximity switch (3), the multiple limiting ribs (11) are provided at an upper part, a lower part and two sides of the proximity switch (3).

2. The water tank assembly as claimed in claim 1, wherein the seal waterproof layer (34) comprises a plastic layer (342) and a waterproof glue (341) provided at an inner side of the plastic layer (342).

3. The water tank assembly as claimed in claim 1, wherein one end of the limiting rib (11) is provided on the outer side wall of the water tank (1), and the other end of the limiting rib (11) is provided with a guiding surface used for guiding when the proximity switch (3) is installed on the installing column (4).

4. The water tank assembly as claimed in claim 1, wherein a circumferential outer side of the installing column (4) is provided with a reinforcing rib (41), and the reinforcing rib (41) is formed by the limiting rib (11) connected with the installing column (4).

5. The water tank assembly as claimed in claim 1, wherein the proximity switch (3) pre-installed on the installing column (4) is connected with the water tank (1) through at least one mode of thread connection, welding, binding, and locking.

6. The water tank assembly as claimed in claim 1, wherein the water tank (1) assembly further comprises a guiding structure (6) used for guiding the floater (2) when the floater (2) is ascended or descended.

7. The water tank assembly as claimed in claim 6, wherein the guiding structure (6) comprises a guiding groove (61), the side wall of the water tank (1) forms one side wall of the guiding groove (61).

8. The water tank assembly as claimed in claim 7, wherein a limiting structure (63) is provided above the guiding groove (61), and used for limiting an ascended maximum position of the floater (2).

9. The water tank assembly as claimed in claim 8, wherein the limiting structure (63) comprises a blocking plate (631) provided at an upper side of a groove end face of the guiding groove (61), the blocking plate (631) is arranged perpendicular to the side wall of the water tank (1).

10. A gas treatment device, comprising the water tank assembly as claimed in any one of claims 1-9.

11. The gas treatment device as claimed in claim 10, wherein the gas treatment device comprises a cooling fan.

## Patentansprüche

1. Wassertankanordnung, umfassend einen Wassertank (1), einen Schwimmer (2) und einen Näherungsschalter (3), wobei der Schwimmer (2) mit dem Wasser in dem Wassertank (1) auf- oder absteigen kann, wobei der Schwimmer (2) magnetische Eigenschaften aufweist, wobei der Näherungsschalter (3) einen Magnetsensor (33) und eine wasserdichte Schicht (34), die außerhalb des Magnetsensors (33) bereitgestellt wird, umfasst, wobei der Magnetsensor (33) gemäß verschiedenen Positionen des Schwimmers (2) im Verhältnis zu dem Magnetsensor (33) unterschiedliche Signale ausgibt, und die wasserdichte Schicht (34) verwendet wird, um den Magnetsensor (33) wasserdicht zu machen,
**dadurch gekennzeichnet, dass** eine Außenseitenwand des Wassertanks (1) mit einer Installationssäule (4) versehen ist, die dazu konfiguriert ist, einen eingeschlossenen Winkel mit einer Seitenwand des Wassertanks (1) zu bilden, und die Installationssäule (4) durch den Näherungsschalter (3) geht, um eine Vorinstallation des Näherungsschalters (3) zu erreichen, wobei die Seitenwand des Wassertanks (1) mit mehreren Begrenzungsrippen (11) versehen ist, wobei die mehreren Begrenzungsrippen (11) auf einer äußeren Umfangsseite des Näherungsschalters (3) bereitgestellt werden, wobei die mehreren Begrenzungsrippen (11) an einem oberen Teil, einem unteren Teil und auf beiden Seiten des Näherungsschalters (3) bereitgestellt werden.

2. Wassertankanordnung nach Anspruch 1, wobei die wasserdichte Schicht (34) eine Kunststoffschicht (342) und einen wasserdichten Klebstoff (341), der auf einer inneren Seite der Kunststoffschicht (342) bereitgestellt wird, umfasst.

3. Wassertankanordnung nach Anspruch 1, wobei ein Ende der Begrenzungsrippe (11) auf der äußeren Seitenwand des Wassertanks (1) bereitgestellt wird, und das andere Ende der Begrenzungsrippe (11) mit einer Führungsfläche versehen ist, die zum Führen verwendet wird, wenn der Näherungsschalter (3) an der Installationssäule (4) installiert ist.

4. Wassertankanordnung nach Anspruch 1, wobei eine äußere Umfangsseite der Installationssäule (4) mit einer Verstärkungsrippe (41) versehen ist, und die Verstärkungsrippe (41) durch die Begrenzungsrippe (11), die mit der Installationssäule (4) verbunden ist, gebildet ist.

5. Wassertankanordnung nach Anspruch 1, wobei der Näherungsschalter (3), der an der Installationssäule (4) vorinstalliert ist, mit dem Wassertank (1) über mindestens eine Möglichkeit von einer Schraubverbindung, Schweißung, Bindung und Verriegelung verbunden ist.

6. Wassertankanordnung nach Anspruch 1, wobei die Wassertankanordnung (1) ferner eine Führungsstruktur (6) umfasst, die verwendet wird, um den Schwimmer (2) zu führen, wenn der Schwimmer (2) angehoben oder abgesenkt wird.

7. Wassertankanordnung nach Anspruch 6, wobei die Führungsstruktur (6) eine Führungsnut (61) umfasst, wobei die Seitenwand des Wassertanks (1) eine Seitenwand der Führungsnut (61) bildet.

8. Wassertankanordnung nach Anspruch 7, wobei eine Begrenzungsstruktur (63) oberhalb der Führungsnut (61) bereitgestellt wird, und verwendet wird, um eine maximale angehobene Position des Schwimmers (2) zu begrenzen.

9. Wassertankanordnung nach Anspruch 8, wobei die Begrenzungsstruktur (63) eine Blockierplatte (631) umfasst, die auf einer oberen Seite einer Nutenendseite der Führungsnut (61) bereitgestellt wird, wobei die Blockierplatte (631) rechtwinklig zu der Seitenwand des Wassertanks (1) angeordnet ist.

10. Gasbehandlungsvorrichtung, umfassend die Wassertankanordnung nach einem der Ansprüche 1 bis 9.

11. Gasbehandlungsvorrichtung nach Anspruch 10, wobei die Gasbehandlungsvorrichtung ein Kühlgebläse umfasst.

## Revendications

1. Ensemble réservoir d'eau, comprenant un réservoir d'eau (1), un flotteur (2) et un commutateur de proximité (3), le flotteur (2) pouvant monter ou descendre avec de l'eau dans le réservoir d'eau (1), le flotteur (2) ayant des propriétés magnétiques, le commutateur de proximité (3) comprenant un capteur magnétique (33) et une couche scellée et étanche à l'eau (34) disposée à l'extérieur du capteur magnétique (33), le capteur magnétique (33) faisant sortir différents signaux selon différentes positions du flotteur (2) par rapport au capteur magnétique (33), et la couche scellée et étanche à l'eau (34) étant utilisée pour l'imperméabilisation du capteur magnétique (33),
**caractérisé en ce qu'**une paroi latérale extérieure du réservoir d'eau (1) est pourvue d'une colonne d'installation (4) qui est configurée pour former un angle inclus avec une paroi latérale du réservoir d'eau (1), et la colonne d'installation (4) passe à travers le commutateur de proximité (3) de façon à obtenir une pré-installation du commutateur de proximité (3), la paroi latérale du réservoir d'eau (1) est pourvue de multiples nervures de limitation (11), les multiples nervures de limitation (11) sont disposées au niveau d'un côté extérieur circonférentiel du commutateur de proximité (3), les multiples nervures de limitation (11) sont disposées au niveau d'une partie supérieure, d'une partie inférieure et de deux côtés du commutateur de proximité (3).

2. Ensemble réservoir d'eau selon la revendication 1, dans lequel la couche scellée et étanche à l'eau (34) comprend une couche de plastique (342) et une colle étanche à l'eau (341) disposée sur un côté intérieur de la couche de plastique (342).

3. Ensemble réservoir d'eau selon la revendication 1, dans lequel une extrémité de la nervure de limitation (11) est disposée sur la paroi latérale extérieure du réservoir d'eau (1), et l'autre extrémité de la nervure de limitation (11) est pourvue d'une surface de guidage utilisée pour guider lorsque le commutateur de proximité (3) est installé sur la colonne d'installation (4).

4. Ensemble réservoir d'eau selon la revendication 1, dans lequel un côté extérieur circonférentiel de la colonne d'installation (4) est pourvu d'une nervure de renforcement (41), et la nervure de renforcement (41) est formée par la nervure de limitation (11) raccordée à la colonne d'installation (4).

5. Ensemble réservoir d'eau selon la revendication 1, dans lequel le commutateur de proximité (3) pré-installé sur la colonne d'installation (4) est raccordé au réservoir d'eau (1) par l'intermédiaire d'au moins un mode de raccord par filetage, de soudage, de liaison et de verrouillage.

6. Ensemble réservoir d'eau selon la revendication 1, dans lequel l'ensemble réservoir d'eau (1) comprend en outre une structure de guidage (6) utilisée pour guider le flotteur (2) lorsque le flotteur (2) est ascendant ou descendant.

7. Ensemble réservoir d'eau selon la revendication 6, dans lequel la structure de guidage (6) comprend une rainure de guidage (61), la paroi latérale du réservoir d'eau (1) formant une paroi latérale de la rainure de guidage (61).

8. Ensemble réservoir d'eau selon la revendication 7, dans lequel une structure de limitation (63) est disposée au-dessus de la rainure de guidage (61), et utilisée pour limiter une position maximale ascendante du flotteur (2).

9. Ensemble réservoir d'eau selon la revendication 8, dans lequel la structure de limitation (63) comprend une plaque de blocage (631) disposée au niveau d'un côté supérieur d'une face d'extrémité de rainure de la rainure de guidage (61), la plaque de blocage (631) étant disposée perpendiculairement à la paroi latérale du réservoir d'eau (1).

10. Dispositif de traitement de gaz, comprenant l'ensemble réservoir d'eau selon l'une quelconque des revendications 1 à 9.

11. Dispositif de traitement de gaz selon la revendication 10, dans lequel le dispositif de traitement de gaz comprend un ventilateur de refroidissement.
